# EUROPEAN PATENT APPLICATION

(11) **EP 1 965 088 A2**
(43) Date of publication of application: **03.09.2008**
(21) Application number: 08003576.9
(22) Date of filing: 27.02.2008
(51) Int. Cl.: F16C 19/36, F16C 33/46

(54) **Tapered roller bearing**

(30) Priority: 28.02.2007 JP 2007048884; 28.02.2007 JP 2007048886
(71) Applicant: JTEKT Corporation, Osaka-shi Osaka 542-8502 (JP)
(72) Inventor: Sada, Takashi, JTEKT Corporation, Osaka-shi, Osaka 542-8502 (JP); Matsuyama, Hiroki, JTEKT COrporation, Osaka-shi, Osaka 542-8502 (JP)
(74) Representative: Görz, Ingo

(57) **Abstract**

A tapered roller bearing includes an inner ring (10), an outer ring (20), a plurality of tapered rollers (30), and a cage (40). The cage (40) includes a large diameter-side annular section (41), a small diameter-side annular section (42), and pillar sections connecting the large diameter-side annular section (41) and the small diameter-side annular section (42) and forming pockets retaining the tapered rollers (30). The radially inner surfaces of the pillar sections are disposed closer to the center than a pitch circle of the tapered rollers (30) and are inclined from the small diameter-side annular section (42) toward the large diameter-side annular section (41), thereby forming guide surfaces that guide lubricating oil toward the large rib. Roller holding portions (46) are formed on side portions of the pillar sections so as to protrude along the outer peripheral surfaces of the tapered rollers (30) to a position located at the outer side in the radial direction than the pitch circle.

## Description

### BACKGROUND OF THE INVENTION

The present invention relates to a tapered roller bearing.

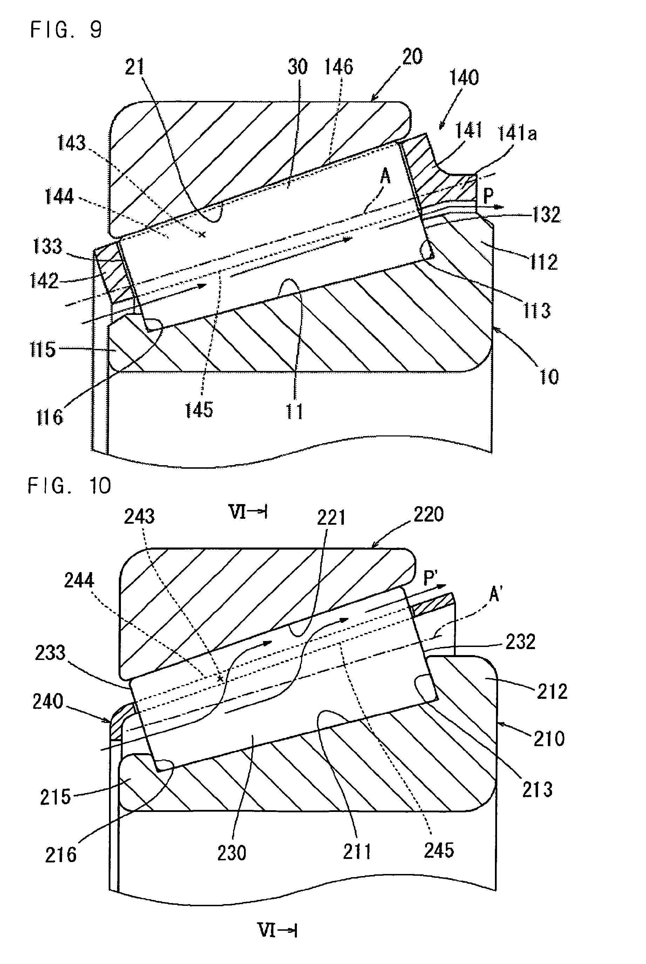

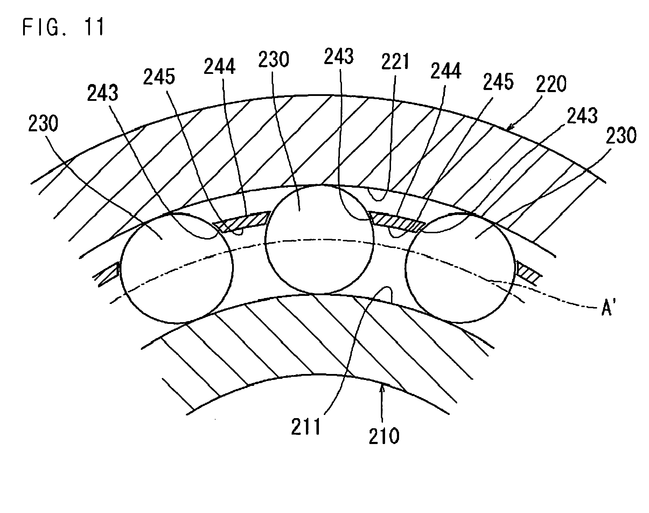

According to the conventional tapered roller bearing, as shown in Figs. 10 and 11, a plurality of tapered rollers 230 are rollably arranged between the respective raceway surfaces 211 and 221 of an inner ring 210 and an outer ring 220. The large end surfaces 232 of the plural tapered rollers 230 are slidably guided by a roller guide surface 213 of a large rib 212 of the inner ring 210. The small end surfaces 233 of the plural tapered rollers 230 are slidably guided by a roller guide surface 216 of a small rib 215 of the inner ring 210. A cage 240 having pockets 243 that retain the plural tapered rollers 230 is provided between the raceway surfaces 211 and 221.
In the tapered roller bearing, the radially inner surfaces 245 of the pillar sections 244 of the cage 240 are disposed at the outer side in the radial direction than the pitch circle (PCD) A' of the plural tapered rollers 230. With this, even in a state that the outer ring 220 is detached, the plural tapered rollers 230 are retained (integrated) close to the raceway surface 211 of the inner ring 210, thereby providing good handling properties (for example, see JP-A-2006-22821).

In the tapered roller bearing shown in Figs. 10 and 11, during rotation of the bearing, fluid is flown from the small rib 215 of the inner ring 210 toward the large rib 212 by a pumping effect of the centrifugal force.
By utilizing the pumping effect, lubricating oil is supplied from the small rib 215 of the inner ring 210 to the inside of the bearing, and the lubricating oil is then discharged from the large rib 212 of the inner ring 210.
However, during high-speed rotation, the centrifugal force increases, and thereby, the lubricating oil supplied to the small rib 215 of the inner rib 210 easily passes through the pockets 243 of the cage 240 and leaks to the outer ring 220, as depicted by the arrow P' in Fig. 10. As a result, the amount of lubricating oil supplied to the areas between the large end surfaces 232 of the tapered rollers 230 and the roller guide surface 213 of the large rib 212 of the inner ring 210 is not sufficient.
In particular, when the amount of lubricating oil supply is further decreased in order to decrease the torque loss of the tapered roller to realize a mechanical device of low torque loss, the amount of lubricating oil supply to the areas between the large end surfaces 232 of the tapered rollers 230 and the roller guide surface 213 of the large rib 212 of the inner ring 210 is more likely to be insufficient, thereby increasing the possibility of a seizure.

### SUMMARY OF THE INVENTION

The invention has been made in view of the problems described above, and an object of the invention is to provide a tapered roller bearing that can supply lubricating oil efficiently to areas between a large end surface of the tapered roller and a roller guide surface of a large rib of an inner ring and that can decrease the torque loss and improve a seizure resistance.

In order to solve the above problem, the present invention provides the following arrangements.
(1) A tapered roller bearing comprising:
   an inner ring including a large rib defining a roller guide surface;
   an outer ring;
   a plurality of tapered rollers that are rollably arranged between the raceway surfaces of the inner and outer rings, large end surfaces of the tapered rollers being slidably guided by the roller guide surface; and
   a cage that is disposed between the inner and outer rings and retains the tapered rollers,
   wherein the cage includes:
   a large diameter-side annular section;
   a small diameter-side annular section; and
   a plurality of pillar sections that connects the large diameter-side annular section and the small diameter-side annular section with each other and partitions and forms pockets that retain the tapered rollers, respectively,
   wherein each of the pillar sections includes a radially inner surface for guiding lubricating oil toward the large rib of the inner ring in a flowing manner, the radially inner surface being disposed closer to an axial center of the cage than a pitch circle of the tapered rollers and the radially inner surface being inclined with respect to the pitch circle from the small diameter-side annular section toward the large diameter-side annular section, and
   wherein roller holding portions are formed on opposite side portions of the pillar sections in the circumferential direction so as to protrude along an outer peripheral surfaces of the tapered rollers to a position located at a radially outer side than the pitch circle.
(2) The tapered roller bearing according to (1), wherein the large diameter-side annular section of the cage is disposed adjacent to an outer peripheral surface of the large rib of the inner ring.
(3) A tapered roller bearing, comprising:
   an inner ring including a large rib defining a roller guide surface;
   an outer ring;
   a plurality of tapered rollers that are rollably arranged between the raceway surfaces of the inner and outer rings, large end surfaces of the tapered rollers being slidably guided by the roller guide surface; and
   a cage that is disposed between the inner and outer rings and retains the tapered rollers, respectively,
   wherein the cage includes:
   a large diameter-side annular section;
   a small diameter-side annular section; and
   a plurality of pillar sections that connects the large diameter-side annular section and the small diameter-side annular section with each other and partitions and forms pockets that retain the tapered rollers, and
   wherein each of the pillar section includes a radially inner surface which is disposed closer to an axial center of the cage than a pitch circle of the tapered rollers, and a radially outer surface of the pillar section is disposed close to a raceway surface of the outer ring to close an interspace area between the adjacent tapered rollers.
(4) The tapered roller bearing according to (3), wherein the large diameter-side annular section of the cage is formed with an annular extension portion disposed adjacent to an outer peripheral surface of the large rib of the inner ring.

According to the arrangement described above, even during high-speed rotation where the centrifugal force increases, it is possible to suppress the leakage of lubricating oil to the outer ring through the pockets of the cage after having flown along the guide surfaces of the pillar sections of the cage. As a result, the amount of lubricating oil supply is reduced to thereby decrease the torque loss of the tapered roller bearing and to prevent the occurrence of a seizure due to the shortage of the lubricating oil.

According to the arrangement described above, the large diameter-side annular section of the cage is disposed adjacent to the outer peripheral surface of the large rib of the inner ring. Therefore, the lubricating oil having flown along the guide surfaces of the pillar sections from the small diameter side to the large diameter side is discharged through areas between the radially inner surfaces of the large diameter-side annular section of the cage and the outer peripheral surface of the large rib of the inner ring.
With this, the supply of lubricating oil to the areas between the large end surfaces of the tapered rollers and the roller guide surface of the large rib of the inner ring can be more smoothly performed. Moreover, it contributes to the cooling of the large rib, and therefore, contributing to the decreasing of the torque loss and improvement in the seizure resistance.

According to the arrangement described above, the interspace areas between the adjacent tapered rollers extending from a position closer to the center than the pitch circle A of the plural tapered rollers to a position adjacent to the raceway surface of the outer ring are closed by the plural pillar sections. Therefore, even during high-speed rotation where the centrifugal force increases, it is possible to suppress the leakage of lubricating oil to the outer ring through the pockets of the cage after having flown along the radially inner surfaces of the pillar sections of the cage as much as possible.
Even when the lubricating oil leaks to the outer ring after passing through the pockets, the amount of lubricating oil leakage can be suppressed as much as possible. For this reason, even when the amount of lubricating oil supplied to the small rib of the inner ring is small, it is possible to efficiently supply the lubricating oil to the areas between the large end surfaces of the tapered rollers and the roller guide surface of the large rib of the inner ring. As a result, the amount of lubricating oil supply is reduced to thereby decrease the torque loss of the tapered roller bearing and to prevent the occurrence of a seizure due to the shortage of the lubricating oil.

According to the arrangement described above, the annular extension portion a of the large diameter-side annular section of the cage is disposed adjacent to the outer peripheral surface of the large rib of the inner ring. Therefore, during rotation of the bearing, the lubricating oil having flown along the radially inner surfaces of the pillar sections from the small diameter side to the large diameter side is discharged through areas between the radially inner surfaces of the annular extension portion a of the large diameter-side annular section and the outer peripheral surface of the large rib of the inner ring.
With this, the supply of lubricating oil to the areas between the large end surfaces of the tapered rollers and the roller guide surface of the large rib of the inner ring can be more smoothly performed. Moreover, it contributes to the cooling of the large rib, and therefore, contributing to the decreasing of the torque loss and improvement in the seizure resistance.

### BRIEF DESCRIPTION OF THE DRAWINGS

Fig. 1 is a longitudinal sectional view of a tapered roller bearing according to a first embodiment of the invention.
Fig. 2 is a transversal sectional view along the line II-II of Fig. 1.
Fig. 3 is an enlarged, longitudinal sectional view showing the attachment state of an inner ring, an outer ring, a tapered roller, and a cage.
Fig. 4 is a transversal sectional view along the line IV-IV of Fig. 3.
Fig. 5 is a longitudinal sectional view of a tapered roller bearing according to a second embodiment of the invention.
Fig. 6 is a transversal sectional view along the line II-II of Fig. 5.
Fig. 7 is an enlarged, longitudinal sectional view showing the attachment state of an inner ring, an outer ring, a tapered roller, and a cage.
Fig. 8 is a transversal sectional view along the line IV-IV of Fig. 7.
Fig. 9 is a longitudinal sectional view of a tapered roller bearing according to a third embodiment of the invention, showing the attachment state of an inner ring, an outer ring, a tapered roller, and a cage.
Fig. 10 is a longitudinal sectional view of a conventional tapered roller bearing, showing the relationships between the inner ring, the outer ring, the tapered roller, and the cage.
Fig. 11 is a transversal sectional view along the line VI-VI of Fig. 10.

### DETAILED DESCRIPTION OF PREFERRED EMBODIMENTS

Hereinafter, a best mode for carrying out the invention will be described with reference to embodiments.

### Embodiment 1

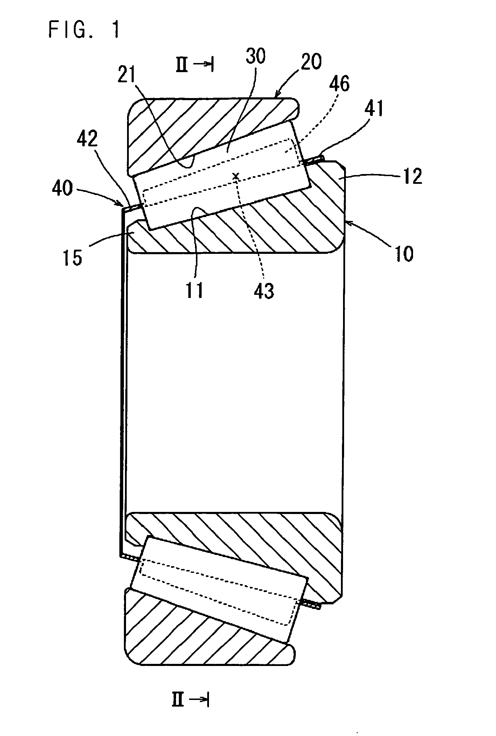

A first embodiment of the invention will be described with reference to Figs. 1 to 4.
Fig. 1 is a longitudinal sectional view of a tapered roller bearing according to a first embodiment of the invention.

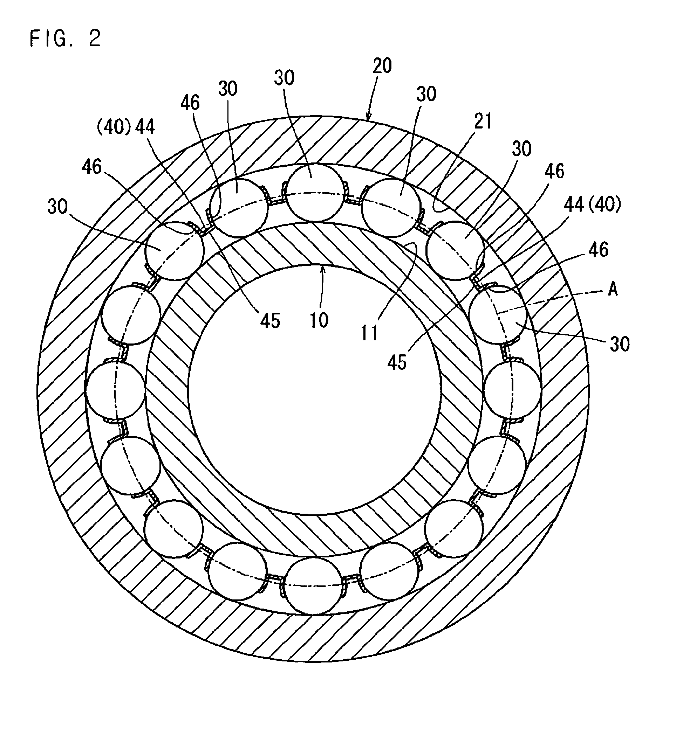

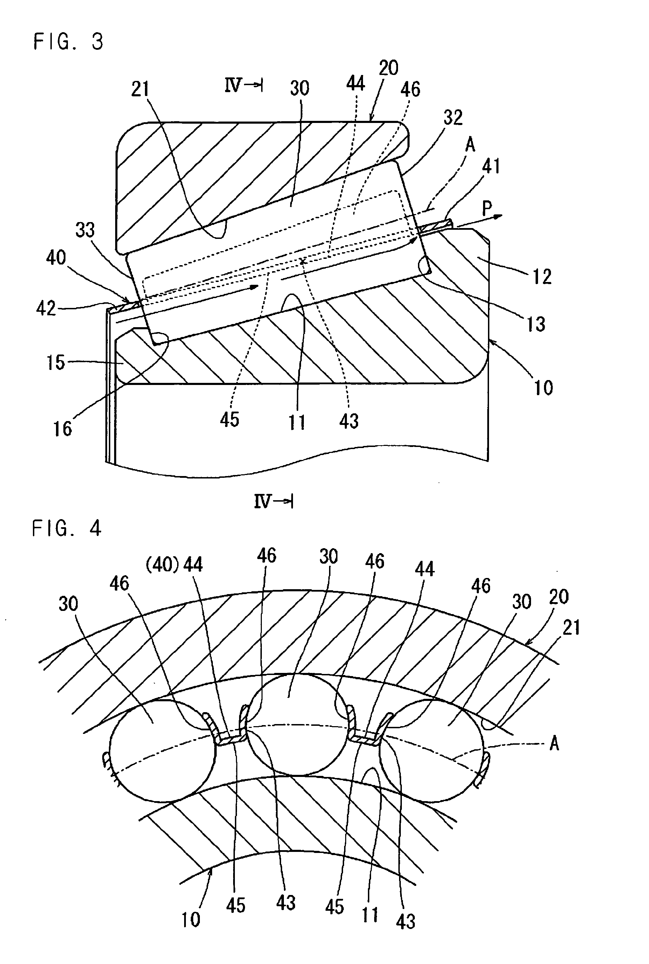

Fig. 2 is a transversal sectional view along the line II-II of Fig. 1. Fig. 3 is an enlarged, longitudinal sectional view showing the attachment state of an inner ring, an outer ring, a tapered roller, and a cage. Fig. 4 is a transversal sectional view along the line IV-IV of Fig. 3.
As shown in Figs. 1 and 2, a tapered roller bearing includes an inner ring 10, an outer ring 20, a plurality of tapered rollers 30, and a cage 40.
The inner ring 10 has a tapered raceway surface 11 formed on an outer peripheral surface, and large and small ribs 12 and 15 are formed at opposite end portions of the raceway surface 11.
The outer ring 20 has a tapered raceway surface 21 formed on an inner peripheral surface so as to oppose the raceway surface 11 of the inner ring 10. The plural tapered rollers 30 are rollably arranged between the raceway surfaces 11 and 21 of the inner ring 10 and the outer ring 20. Large end surfaces 32 of the plural tapered rollers 30 are slidably guided by a roller guide surface 13 of the large rib 12 of the inner ring 10. Small end surfaces 33 of the plural tapered rollers 30 are slidably guided by a roller guide surface 16 of the small rib 15 of the inner ring 10.

As shown in Figs. 1 and 2, the cage 40 retaining the plural tapered rollers 30 between the inner ring 10 and the outer ring 20 is formed by pressing a metal plate in a tapered shape that can be attached between the raceway surfaces 11 and 21.
The cage 40 includes a large diameter-side annular section 41, a small diameter-side annular section 42, and a plurality of pillar sections 44 that connects these annular sections 41 and 42 with each other and that partitions and forms pockets 43 that separately retain the plural tapered rollers 30. The cage 40 is substantially formed in a tapered shape as a whole.

As shown in Figs. 3 and 4, the radially inner surfaces of the plural pillar sections 44 are disposed closer to the center than a pitch circle (PCD) A of the plural tapered rollers 30 and formed in such a shape that is inclined from the small diameter-side annular section 42 toward the large diameter-side annular section 41, thereby forming guide surfaces 45 that guide lubricating oil toward the large rib 12 of the inner ring 10 in a flowing manner.
As shown in Fig. 4, on opposite side portions of the plural pillar sections 44 in the circumferential direction, roller holding portions 46 are formed so as to have circular arc-like (or curved) cross-sections that extend along the outer peripheral surfaces of the tapered rollers 30 in a non-contacting or substantially contacting manner. The front ends of the roller holding portions 46 extend to a position located at the outer side in the radial direction than the pitch circle A. In other words, the roller holding portions 46 are formed to cut across the pitch circle A and extend from the center to the outer side in the radial direction. The length of the roller holding portions 46 is designed several times greater than the thickness of the pillar sections 44. With this, the tapered rollers 30 can be held by a strong force, and it is possible to suppress the leakage of lubricating oil through a portion between the outer peripheral surfaces of the tapered rollers 30 and the roller holding portions 46.

In the first embodiment, the small diameter-side annular section 42 of the cage 40, the plural pillar sections 44, and the radially inner surface of the large diameter-side annular section 41 form an inclined surface that is continuous in a straight line. Moreover, the radially inner surface of the large diameter-side annular section 41 of the cage 40 is disposed adjacent to the outer peripheral surface of the large rib 12 of the inner ring 10.

The tapered roller bearing of the first embodiment has the above-described arrangement.
Therefore, during rotation of the bearing, the lubricating oil supplied to the small rib 15 of the inner ring 10 flows along the guide surfaces 45 of the pillar sections 44 of the cage 40 from the small diameter side to the outer diameter side by a pumping effect of the centrifugal force, as depicted by the arrow P in Fig. 3.
The guide surfaces 45 of the pillar sections 44 are disposed closer to the center than the pitch circle A of the plural tapered rollers 30. The roller holding portions 46 protruding from opposite side portions in the circumferential direction of the pillar sections 44 are formed to extend along the outer peripheral surfaces of the tapered rollers 30 to a position located at the outer side in the radial direction than the pitch circle A.
Therefore, even during high-speed rotation where the centrifugal force increases, it is possible to suppress the leakage of lubricating oil to the outer ring 20 through the pockets 43 of the cage 40 after having flown along the guide surfaces 45 of the pillar sections 44 of the cage 40. As a result, the lubricating oil can be smoothly flown and supplied to areas between the large end surfaces 32 of the tapered rollers 30 and the roller guide surface 13 of the large rib 12 of the inner ring 10.
As described above, it is possible to efficiently supply the lubricating oil to the areas between the large end surfaces 32 of the tapered rollers 30 and the roller guide surface 13 of the large rib 12 of the inner ring 10. For this reason, the amount of lubricating oil supply is reduced to thereby decrease the torque loss of the tapered roller bearing and to prevent the occurrence of a seizure due to the shortage of the lubricating oil.

In the first embodiment, the large diameter-side annular section 41 of the cage 40 is disposed adjacent to the outer peripheral surface of the large rib 12 of the inner ring 10. The lubricating oil having flown along the guide surfaces 45 of the pillar sections 44 from the small diameter side to the large diameter side is discharged through areas between the radially inner surfaces of the large diameter-side annular section 41 of the cage 40 and the outer peripheral surface of the large rib 12 of the inner ring 10.
With this, the supply of lubricating oil to the areas between the large end surfaces 32 of the tapered rollers 30 and the roller guide surface 13 of the large rib 12 of the inner ring 10 can be more smoothly performed. Moreover, it contributes to the cooling of the large rib 12, and therefore, contributing to the decreasing of the torque loss and improvement in the seizure resistance.

The invention is not limited to the first embodiment described above.
For example, the first embodiment has been described for the case in which the cage 40 is formed by pressing a metal plate. However, the cage 40 may be formed by inj ection-molding of a synthetic resin material excellent in heat resistant properties and anti-abrasion properties.

### Embodiment 2

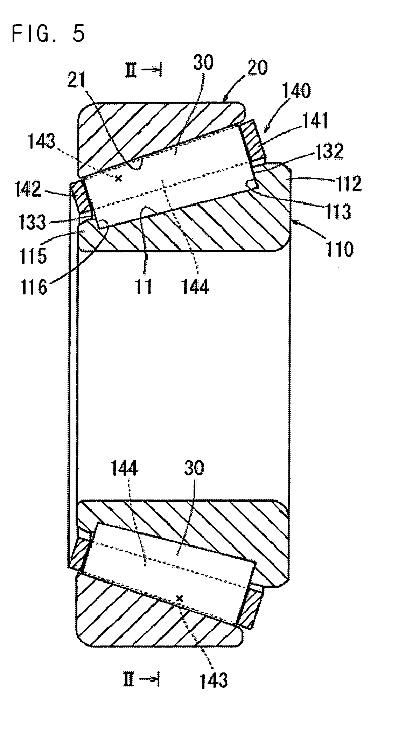

A second embodiment of the invention will be described with reference to Figs. 5 to 8.

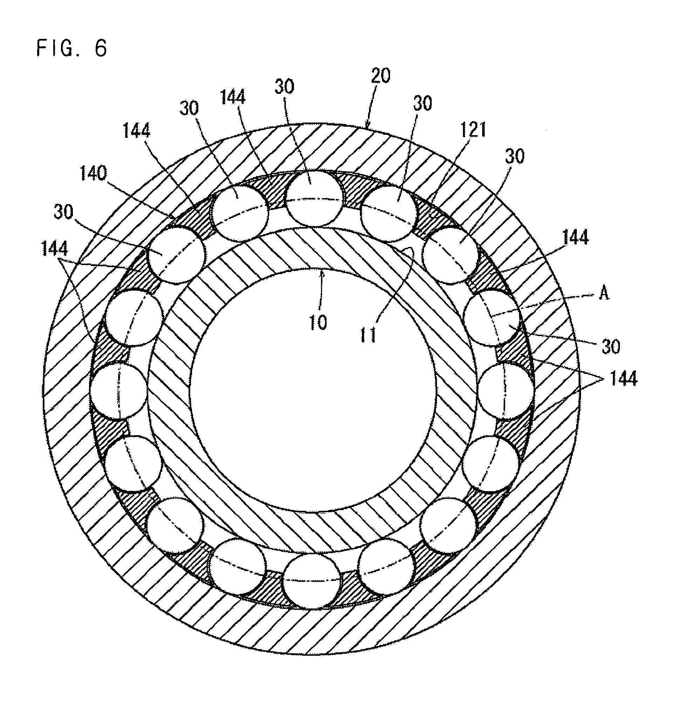

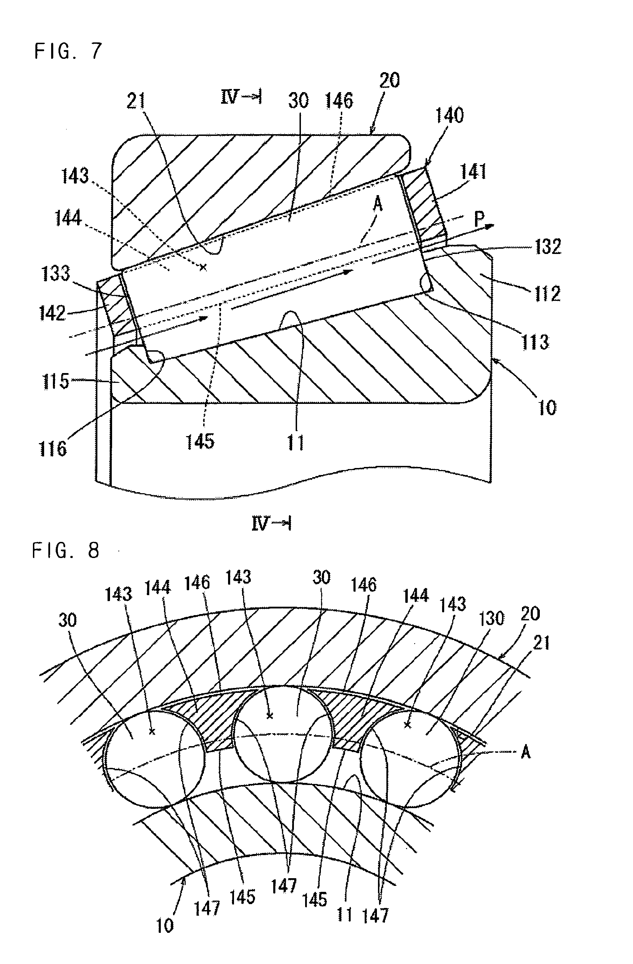

Fig. 5 is a longitudinal sectional view of a tapered roller bearing according to a second embodiment of the invention. Fig. 6 is a transversal sectional view along the line II-II of Fig. 5. Fig. 7 is an enlarged, longitudinal sectional view showing the attachment state of an inner ring, an outer ring, a tapered roller, and a cage. Fig. 8 is a transversal sectional view along the line IV-IV of Fig. 7.
In a tapered roller bearing of the second embodiment, the same elements as the tapered roller bearing of the first embodiment will be denoted by the same reference numerals, and descriptions thereof will be omitted.

As shown in Figs. 5 and 6, the cage 140 retaining the plural tapered rollers 30 between the inner ring 10 and the outer ring 20 is formed by injection-molding of a synthetic resin material excellent in the heat resistant properties and the anti-abrasion properties and formed in a tapered shape that can be attached between the raceway surfaces 11 and 21.
The cage 140 includes a large diameter-side annular section 141, a small diameter-side annular section 142, and a plurality of pillar sections 144 that connects these annular sections 141 and 142 with each other and that partitions and forms pockets 143 that separately retain the plural tapered rollers 30. The cage 140 is substantially formed in a tapered shape as a whole.

As shown in Figs. 7 and 8, the radially inner surfaces 145 of the plural pillar sections 144 of the cage 140 are disposed closer to the center than a pitch circle (PCD) A of the plural tapered rollers 30 and formed in such a shape that is inclined from the small diameter-side annular section 142 toward the large diameter-side annular section 141, thereby guiding lubricating oil toward the large rib 12 of the inner ring 10 in a flowing manner. The radially outer surfaces 146 of the plural pillar sections 144 are formed in such a shape that is inclined adjacent to the raceway surface 21 of the outer ring 20.
On opposite side portions (opposite lateral walls of the pockets 143) in the circumferential direction of the plural pillar sections 144, roller guide surfaces 47 are formed so as to have circular arc-like (or curved) cross-sections that extend along the outer peripheral surfaces of the adjacent tapered rollers 30 in a non-contacting or substantially contacting manner.
The plural pillar sections 144 close the interspace areas between the adjacent tapered rollers 30 extending from a position closer to the center than the pitch circle A of the plural tapered rollers 30 to a position adjacent to the raceway surface 21 of the outer ring 20.

The tapered roller bearing of the second embodiment has the above-described arrangement.
Therefore, during rotation of the bearing, the lubricating oil supplied to the small rib 15 of the inner ring 10 flows along the radially inner surfaces 145 of the pillar sections 144 of the cage 140 from the small diameter side to the outer diameter side by a pumping effect of the centrifugal force, as depicted by the arrow P in Fig. 7.
As shown in Figs. 7 and 8, the radially inner surfaces 145 of the plural pillar sections 144 of the cage 140 are disposed closer to the center than the pitch circle (PCD) A of the plural tapered rollers 30. The radially outer surfaces 146 of the plural pillar sections 144 are disposed adjacent to the raceway surface 21 of the outer ring 20. The interspace areas between the adjacent tapered rollers 30 extending from a position closer to the center than the pitch circle A of the plural tapered rollers 30 to a position adjacent to the raceway surface 21 of the outer ring 20 are closed by the plural pillar sections 144.
Therefore, even during high-speed rotation where the centrifugal force increases, it is possible to suppress the leakage of lubricating oil to the outer ring 20 through the pockets 143 of the cage 140 after having flown along the radially inner surfaces 145 of the pillar sections 144 of the cage 140 as much as possible.
Even when the lubricating oil leaks to the outer ring 20 after passing through the pockets 143, the amount of lubricating oil leakage can be suppressed as much as possible. For this reason, even when the amount of lubricating oil supplied to the small rib 15 of the inner ring 10 is small, it is possible to efficiently supply the lubricating oil to the areas between the large end surfaces 32 of the tapered rollers 30 and the roller guide surface 16 of the large rib 12 of the inner ring 10. As a result, the amount of lubricating oil supply is reduced to thereby decrease the torque loss of the tapered roller bearing and to prevent the occurrence of a seizure due to the shortage of the lubricating oil.

### Embodiment 3

Next, a third embodiment of the invention will be described with reference to Fig. 9.
Fig. 9 is a longitudinal sectional view of a tapered roller bearing according to a third embodiment of the invention, showing the attachment state of an inner ring, an outer ring, a tapered roller, and a cage.
As shown in Fig. 9, in the third embodiment, an annular extension portion 141a is formed in the large diameter-side annular section 141 of the cage 140 and disposed adjacent to the outer peripheral surface of the large rib 12 of the inner ring 10.
Other arrangement of the third embodiment is the same as that of the second embodiment, and thus the same elements will be denoted by the same reference numerals and will not be described.

The tapered roller bearing of the third embodiment has the above-described arrangement.
The annular extension portion 141a of the large diameter-side annular section 141 of the cage 140 is disposed adjacent to the outer peripheral surface of the large rib 12 of the inner ring 10. Therefore, during rotation of the bearing, the lubricating oil having flown along the radially inner surfaces 145 of the pillar sections 144 from the small diameter side to the large diameter side is discharged through areas between the radially inner surfaces of the annular extension portion 141a of the large diameter-side annular section 141 and the outer peripheral surface of the large rib 12 of the inner ring 10.
With this, the supply of lubricating oil to the areas between the large end surfaces 32 of the tapered rollers 30 and the roller guide surface 13 of the large rib 12 of the inner ring 10 can be more smoothly performed. Moreover, it contributes to the cooling of the large rib 12, and therefore, contributing to the decreasing of the torque loss and improvement in the seizure resistance.

The invention is not limited to the second and third embodiments described above.
For example, the second and third embodiments have been described for the case in which the cage 140 is formed by a single component. However, when it is difficult to mount the tapered rollers 30 in the plural pockets 143 of the cage 140, the cage 140 may be modified so as to be easily elastically exploded by forming the plural pillar section 144 of the cage 140 using hollow pillars.
In such a case, the cage 140 can be formed by gas injection molding.
The cage 140 may be formed by splitting the cage in the longitudinal direction or the radial direction into two split parts, for example, and the tapered rollers 30 may be mounted thereon when assembling the split parts with each other.
For example, when the cage 140 is split in the longitudinal direction, the middle portions in the longitudinal direction of the plural pillar sections 144 of the cage 140 may be used as the splitting surfaces, or the interfacing portions of the plural pillar sections 144 of the cage 140 and the large diameter-side annular section 141 may be used as the splitting surfaces.
On the other hand, when the cage 140 is split in the radial direction, the cage 140 may be split into an inner diameter-side split part and an outer diameter-side split part with the splitting surfaces arranged along the pitch circle A of the plural tapered rollers 30.
When the cage 140 is formed by plural (two) split parts, a clip part and a locking part may be provided to the splitting surfaces of the split parts so that the clip part and the locking part can engage with each other. Accordingly, it is possible to integrate the respective split parts with each other to form the cage 140.
In the second and third embodiments described above, the cage 140 has been described as being formed by injection molding of a synthetic resin material excellent in the heat resistant properties and the anti-abrasion properties. However, the cage 140 may be from by pressing a metal plate.

## Claims

1. A tapered roller bearing comprising:
an inner ring including a large rib defining a roller guide surface;
an outer ring;
a plurality of tapered rollers that are rollably arranged between the raceway surfaces of the inner and outer rings, large end surfaces of the tapered rollers being slidably guided by the roller guide surface; and
a cage that is disposed between the inner and outer rings and retains the tapered rollers,
wherein the cage includes:
a large diameter-side annular section;
a small diameter-side annular section; and
a plurality of pillar sections that connects the large diameter-side annular section and the small diameter-side annular section with each other and partitions and forms pockets that retain the tapered rollers, respectively,
wherein each of the pillar sections includes a radially inner surface for guiding lubricating oil toward the large rib of the inner ring in a flowing manner, the radially inner surface being disposed closer to an axial center of the cage than a pitch circle of the tapered rollers and the radially inner surface being inclined with respect to the pitch circle from the small diameter-side annular section toward the large diameter-side annular section, and
wherein roller holding portions are formed on opposite side portions of the pillar sections in the circumferential direction so as to protrude along an outer peripheral surfaces of the tapered rollers to a position located at a radially outer side than the pitch circle.

2. The tapered roller bearing according to Claim 1, wherein the large diameter-side annular section of the cage is disposed adjacent to on outer peripheral surface of the large rib of the inner ring.

3. A tapered roller bearing, comprising:
an inner ring including a large rib defining a roller guide surface;
an outer ring;
a plurality of tapered rollers that are rollably arranged between the raceway surfaces of the inner and outer rings, large end surfaces of the tapered rollers being slidably guided by the roller guide surface; and
a cage that is disposed between the inner and outer rings and retains the tapered rollers, respectively,
wherein the cage includes:
a large diameter-side annular section;
a small diameter-side annular section; and
a plurality of pillar sections that connects the large diameter-side annular section and the small diameter-side annular section with each other and partitions and forms pockets that retain the tapered rollers, and
wherein each of the pillar section includes a radially inner surface which is disposed closer to an axial center of the cage than a pitch circle of the tapered rollers, and a radially outer surface of the pillar section is disposed close to a raceway surface of the outer ring to close an interspace area between the adjacent tapered rollers.

4. The tapered roller bearing according to Claim 3, wherein the large diameter-side annular section of the cage is formed with an annular extension portion disposed adjacent to an outer peripheral surface of the large rib of the inner ring.
